# EUROPÄISCHE PATENTSCHRIFT

(11) **EP 3 078 213 B1**
(45) Veröffentlichungstag und Bekanntmachung des Hinweises auf die Patenterteilung: **26.06.2019**
(21) Anmeldenummer: 13802569.7
(22) Anmeldetag: 02.12.2013
(51) Int. Cl.: H04L 29/08, H04W 4/50, A47L 11/40, G06Q 10/06

(54) **VERFAHREN ZUR ÜBERWACHUNG EINES EINSATZES EINER FLÄCHENBEARBEITUNGSVORRICHTUNG UND INFORMATIONSSYSTEM**
METHOD FOR MONITORING A USE OF A SURFACE-TREATING DEVICE AND INFORMATION SYSTEM
PROCÉDÉ POUR SURVEILLER L'APPLICATION D'UN DISPOSITIF DE TRAITEMENT DE SURFACE ET SYSTÈME DE SURVEILLANCE

(43) Veröffentlichungstag der Anmeldung: 12.10.2016
(73) Patentinhaber: Alfred Kärcher SE & Co. KG, 71364 Winnenden (DE)
(72) Erfinder: GROHMANN, Alexander, 73660 Urbach (DE)
(74) Vertreter: Hoeger, Stellrecht & Partner Patentanwälte mbB
(86) Internationale Anmeldenummer: PCT/EP2013/075274
(87) Internationale Veröffentlichungsnummer: WO 2015/081977

(56) Entgegenhaltungen:
- EP-A2- 2 511 782
- US-A1- 2005 204 505
- US-A1- 2012 158 915

## Beschreibung

Die Erfindung betrifft ein Verfahren zur Überwachung eines Einsatzes einer Flächenbearbeitungsvorrichtung, der ein Bearbeitungsauftrag zugewiesen ist.

Außerdem betrifft die Erfindung ein Informationssystem zur Durchführung des Verfahrens, umfassend eine Flächenbearbeitungsvorrichtung, der ein Bearbeitungsauftrag zugewiesen ist, und eine externe Empfangseinheit.

Im Stand der Technik sind Verfahren und Informationssysteme bekannt, mit denen sich der Einsatz einer Flächenbearbeitungsvorrichtung überwachen lässt. Beispielsweise kann eine Bedien- oder Aufsichtsperson nach Betrieb der Flächenbearbeitungsvorrichtung, insbesondere der Abarbeitung eines Bearbeitungsauftrages, eine Übersicht über Betriebs- und Arbeitszeiten der Vorrichtung dargestellt werden. Ein entsprechender Bericht fasst beispielsweise die Arbeitszeit pro Flächenbearbeitungsvorrichtung pro Zeiteinheit (etwa pro Tag) grafisch zusammen. Die für die Erstellung des Berichtes erforderlichen Daten können von der Flächenbearbeitungsvorrichtung unter Einsatz eines Telematiksystems an einen externen Empfänger übertragen und von diesem ausgewertet werden.

Bei andersartigen Flächenbearbeitungsvorrichtungen ist es bekannt Zeiten festzulegen, in denen die Flächenbearbeitungsvorrichtung betrieben werden darf. Diese umfassen auch die Vorgabe eines frühestmöglichen Zeitpunktes der Betriebsaufnahme und eines spätestmöglichen Zeitpunktes des Betriebsendes. Ein solches Verfahren dient zur Kontrolle, dass die Flächenbearbeitungsvorrichtung nur im Umfang eines erlaubten Arbeitsumfanges eingesetzt wird.

Unter einer "Flächenbearbeitungsvorrichtung" wird vorliegend sowohl eine von einer Bedienperson geführte Flächenbearbeitungsvorrichtung verstanden (beispielsweise eine Nachlauf- oder Aufsitz-Vorrichtung) als auch eine selbstfahrende und selbstlenkende Flächenbearbeitungsvorrichtung, welche eine autonome Bearbeitung einer Fläche ermöglicht. Dementsprechend kann der Bearbeitungsauftrag einer Bedienperson der Flächenbearbeitungsvorrichtung zugewiesen sein, welche Bedienperson den Bearbeitungsauftrag unter Einsatz der Flächenbearbeitungsvorrichtung ausführt. Der Bearbeitungsauftrag kann auch nur der ihn autonom abarbeitenden selbstlenkenden und selbstfahrenden Flächenbearbeitungsvorrichtung zugewiesen sein.

Die US 2005/0204505 A1 beschreibt ein Verfahren, bei dem einer autonomen Reinigungsvorrichtung ein Reinigungsauftrag zugewiesen ist. Ein Benutzer kann der Reinigungsvorrichtung den gewünschten Startzeitpunkt für die Abarbeitung des Reinigungsauftrags kabellos von einem externen Computer vorgeben. Eine interne Steuereinheit der Reinigungsvorrichtung löst rechtzeitig vor dem Startzeitpunkt eine Selbstdiagnose aus, bei der die ordnungsgemäße Funktion einer Antriebseinheit, einer Reinigungseinheit und eines Saugaggregates sowie die verbleibende Batteriekapazität und der Füllgrad eines Schmutzsammelbehälters der Reinigungsvorrichtung überprüft werden. Bei fehlender Eignung zur Ausführung des Reinigungsauftrages übermittelt die Reinigungsvorrichtung eine diesbezügliche Nachricht an den Benutzer, und eine Abarbeitung des Reinigungsauftrages unterbleibt.

Eine autonome Reinigungsvorrichtung, die Statusinformationen kabellos an ein externes Zusatzgerät, beispielsweise ein Smartphone, eines Benutzers übertragen kann, ist in der EP 2 511 782 A2 beschrieben.

Aufgabe der vorliegenden Erfindung ist es, ein Verfahren der eingangs genannten Art bereitzustellen, das eine bessere Überwachung der Abarbeitung des Bearbeitungsauftrages ermöglicht.

Diese Aufgabe wird erfindungsgemäß durch ein Verfahren mit den Merkmalen von Anspruch 1 gelöst.

Bei dem erfindungsgemäßen Verfahren ist vorgesehen, dass von der Flächenbearbeitungsvorrichtung eine Mitteilung über den Betrieb und damit betreffend die Abarbeitung des Bearbeitungsauftrages an eine externe Empfangseinheit übermittelt wird. Bei der externen Empfangseinheit handelt es sich zum Beispiel um eine Leitstelle, von der aus eine Mehrzahl von Flächenbearbeitungsvorrichtungen überwacht und/oder gesteuert werden können, zum Beispiel die Leitstelle eines Betreibers der Flächenbearbeitungsvorrichtungen. Es wird festgestellt, ob der Betrieb der Flächenbearbeitungsvorrichtung zum Betriebszeitpunkt vor oder spätestens an einem spätestmöglichen Betriebsaufnahmezeitpunkt liegt. Dadurch kann an der Empfangseinheit festgestellt werden, dass der Bearbeitungsauftrag am Betriebsaufnahmezeitpunkt zumindest teilweise abgearbeitet ist oder mit der Abarbeitung des Bearbeitungsauftrages begonnen wurde. Unter der Annahme, dass der Bearbeitungsauftrag in der erwarteten Dauer von der Flächenbearbeitungsvorrichtung abgearbeitet werden kann, ist es der Empfangseinheit dadurch möglich festzustellen, ob der Bearbeitungsauftrag zum spätestmöglichen Auftragserledigungszeitpunkt abgearbeitet ist. Dies ist insbesondere dann von Vorteil, wenn ein Auftraggeber des Betreibers der Flächenbearbeitungsvorrichtung die Auftragsvergabe an die Bedingung knüpft, dass der Bearbeitungsauftrag spätestens zum Auftragserledigungszeitpunkt abgearbeitet ist. Für den Betreiber der Flächenbearbeitungsvorrichtung ist dadurch bereits vor diesem Zeitpunkt eine Möglichkeit zur Kontrolle vorhanden, ob der Bearbeitungsauftrag rechtzeitig abgearbeitet werden kann. Erforderlichenfalls und vorzugsweise, darauf wird nachfolgend noch eingegangen, kann der Bearbeitungsauftrag anderweitig vergeben werden, damit er rechtzeitig vor dem Auftragserledigungszeitpunkt abgearbeitet ist.

Der Betriebsaufnahmezeitpunkt und/oder der Auftragserledigungszeitpunkt sind bevorzugt so vorgebbar, dass die erwartete Zeit zur Abarbeitung des Auftrages kürzer ist als die Dauer zwischen diesen beiden Zeitpunkten.

Insbesondere ist es günstig, wenn an der Empfangseinheit festgestellt wird, dass die Abarbeitung des Bearbeitungsauftrags unter der Annahme, dass der Betrieb der Flächenbearbeitungsvorrichtung fortgesetzt wird, vor dem Auftragserledigungszeitpunkt abgeschlossen sein wird. An der Empfangseinheit, beispielsweise selbsttätig oder durch eine Aufsichtsperson der Flächenbearbeitungsvorrichtung, kann dadurch Gewissheit geschaffen werden, dass der Bearbeitungsauftrag rechtzeitig abgearbeitet ist.

Vorteilhafterweise wird die Mitteilung von der Flächenbearbeitungsvorrichtung ohne vorherige Aufforderung der Empfangseinheit zur Mitteilung an diese übertragen, insbesondere wird die Mitteilung günstigerweise von der Flächenbearbeitungsvorrichtung selbsttätig ohne Zutun einer Bedienperson der Flächenbearbeitungsvorrichtung übermittelt. Dadurch kann vermieden werden, dass eine Bedienperson die Mitteilung an die Empfangseinheit zu übermitteln vergisst, obwohl sie bereits vor dem Betriebsaufnahmezeitpunkt mit der Abarbeitung des Bearbeitungsauftrages begonnen hat. Außerdem ist der Gefahr vorgebeugt, dass die Bedienperson, ohne dass sie den Bearbeitungsauftrag abarbeitet, eine entsprechende (fehlerhafte) Mitteilung an die Empfangseinheit übermittelt. Stattdessen kann die Flächenbearbeitungsvorrichtung von sich aus und bevorzugt ohne vorherige Aufforderung durch die Empfangseinheit eine entsprechende Mitteilung an die Empfangseinheit übermitteln.

Von Vorteil ist es, wenn die Mitteilung von der Flächenbearbeitungsvorrichtung zum Betriebszeitpunkt übermittelt wird. Zum Betriebszeitpunkt arbeitet die Flächenbearbeitungsvorrichtung den Bearbeitungsauftrag ab oder beginnt damit, so dass eine eindeutige Zuordnung des Betriebszeitpunktes zur Arbeit der Flächenbearbeitungsvorrichtung möglich ist.

Vorteilhafterweise wird die Mitteilung bei Inbetriebnahme oder Inbetriebsetzung der Flächenbearbeitungsvorrichtung an die Empfangseinheit übermittelt. "Inbetriebnahme" bezieht sich vorliegend insbesondere auf die Inbetriebnahme der Flächenbearbeitungsvorrichtung durch eine Bedienperson. "Inbetriebsetzung" bezieht sich vorliegend insbesondere auf die Aufnahme des Betriebes im Fall einer selbstfahrenden und selbstlenkenden Flächenbearbeitungsvorrichtung.

Günstig ist es, wenn die Mitteilung mindestens eine der folgenden Informationen umfasst und/oder erfordert:
- Die Flächenbearbeitungsvorrichtung ist eingeschaltet. Beispielsweise wird bei Aktivieren eines Hauptschalters oder eines Zeitschalters der Flächenbearbeitungsvorrichtung ein Einschaltzustand erfasst.
- Die Mitteilung erfordert und/oder umfasst eine Zeitinformation betreffend den Einschaltzeitpunkt. Die Zeitinformation ist beispielsweise ein Zeitstempel für den Zeitpunkt der Inbetriebnahme oder den Zeitpunkt der Inbetriebsetzung der Flächenbearbeitungsvorrichtung.
- Mindestens eine Funktionseinheit der Flächenbearbeitungsvorrichtung ist in Betrieb oder in Betrieb genommen worden. Bei der mindestens einen Funktionseinheit handelt es sich beispielsweise um ein Reinigungswerkzeug, eine Antriebseinrichtung, eine Reinigungsmitteldosiereinrichtung, eine Schmutzaufnahmeeinrichtung, eine Druckerzeugungseinrichtung oder eine Heizeinrichtung der Flächenbearbeitungsvorrichtung. Eine Zeitinformation betreffend die Inbetriebnahme der mindestens einen Funktionseinheit kann von der Mitteilung umfasst und/oder von dieser erfordert sein, zum Beispiel in Form eines Zeitstempels.
- Die Flächenbearbeitungsvorrichtung wird bewegt. Zu diesem Zweck kann vorgesehen sein, dass mittels eines Positionssensors eine Positionsänderung der Flächenbearbeitungsvorrichtung registriert wird und/oder dass der Betrieb einer Antriebseinrichtung überprüft wird und/oder dass odometrische Daten eines Fahrwerks der Flächenbearbeitungsvorrichtung ausgewertet und überprüft werden. Auch in diesem Fall kann das Vorhandensein einer Zeitinformation, etwa eines Zeitstempels, von der Mitteilung umfasst und/oder erfordert sein.

Günstigerweise ist vorgesehen, dass über den Zeitpunkt der Inbetriebnahme oder Inbetriebsetzung hinaus mindestens eine der vorstehend genannten, weitergehenden Informationen von der Mitteilung umfasst oder für die Übermittlung derselben erforderlich ist. Dadurch kann beispielsweise sichergestellt werden, dass die Flächenbearbeitungsvorrichtung von einer Bedienperson nicht nur eingeschaltet, sondern von dieser auch zur Abarbeitung des Bearbeitungsauftrages verwendet wird, wobei zum Beispiel eine Funktionseinheit in Betrieb genommen ist und sich die Flächenbearbeitungsvorrichtung bewegt.

Günstig ist es, wenn an der Empfangseinheit festgestellt wird, ob der Betriebszeitpunkt innerhalb eines dem Betriebsaufnahmezeitpunkt vorgelagerten, hinsichtlich seiner Dauer vorgegebenen oder vorgebbaren Vorlaufzeitraumes liegt. Dadurch kann an der Empfangseinheit die Gewissheit erhöht werden, dass der Bearbeitungsauftrag rechtzeitig vor dem Auftragserledigungszeitpunkt abgearbeitet sein wird. Insbesondere kann die Mitteilung als Betriebszeitpunkt den Zeitpunkt der Inbetriebnahme oder Inbetriebsetzung der Flächenbearbeitungsvorrichtung umfassen. Sofern dieser innerhalb des Vorlaufzeitraumes liegt, kann an der Empfangseinheit davon ausgegangen werden, dass der Bearbeitungsauftrag aller Voraussicht nach erfüllt werden kann.

Es kann vorgesehen sein, dass die Mitteilung betreffend den Betrieb der Flächenbearbeitungsvorrichtung nur als solche angesehen wird, wenn der Betriebszeitpunkt innerhalb des Vorlaufzeitraumes liegt. Eine Mitteilung über einen Betriebszeitpunkt vor dem Vorlaufzeitraum kann beispielsweise ignoriert oder verworfen werden. Sofern in diesem Fall nicht spätestens am Betriebsaufnahmezeitpunkt eine weitere Mitteilung betreffend den Betrieb der Flächenbearbeitungsvorrichtung vorliegt, kann an der Empfangseinheit davon ausgegangen werden, dass möglicherweise der Bearbeitungsauftrag nicht rechtzeitig erfüllt werden wird. Bei der gegenwärtigen Ausführungsform kann insbesondere sichergestellt werden, dass eine Abarbeitung des Bearbeitungsauftrages "zu früh" zumindest teilweise vor dem Vorlaufzeitraum als unwirksam anerkannt wird. Dies erlaubt es beispielsweise zu berücksichtigen, dass sich der Zustand der bearbeiteten Fläche im Laufe der Zeit wieder so ändert, dass eine erneute Bearbeitung erforderlich ist. Durch Berücksichtigung einer Bearbeitung der Fläche zumindest teilweise während des Vorlaufzeitraumes kann dadurch die Wahrscheinlichkeit erhöht werden, dass nach Abarbeitung des Bearbeitungsauftrages die Fläche in einem bearbeiteten Zustand vorliegt, der vor dem Auftragserledigungszeitpunkt keine erneute Bearbeitung erfordert.

Es kann vorgesehen sein, dass von der Flächenbearbeitungsvorrichtung mehr als nur eine Mitteilung betreffend den Betrieb der Flächenbearbeitungsvorrichtung übermittelt wird. Beispielsweise übermittelt die Flächenbearbeitungsvorrichtung in regelmäßigen Abständen eine diesbezügliche Mitteilung an die Empfangseinheit.

Von Vorteil ist es, wenn in dem Fall, dass eine Mitteilung der Flächenbearbeitungsvorrichtung betreffend deren Betrieb an die Empfangseinheit bis zum Betriebsaufnahmezeitpunkt unterbleibt (oder wie vorstehend erwähnt nicht als solche angesehen wird), von der Empfangseinheit mindestens eines der folgenden vorgenommen wird:
- Übermitteln einer Meldung an eine Aufsichtsperson der Flächenbearbeitungsvorrichtung. Beispielsweise wird ein Einsatzleiter, der die Empfangseinheit und eine oder mehrere Flächenbearbeitungsvorrichtungen beaufsichtigt, über die Gefahr eines möglicherweise nicht erledigten Bearbeitungsauftrages informiert.
- Erstellen eines Berichtes, der die fehlende oder verspätete Abarbeitung des Bearbeitungsauftrages durch die Flächenbearbeitungsvorrichtung umfasst. Beispielsweise für Dokumentations- und Kontrollzwecke kann von der Empfangseinheit ein entsprechender Bericht erstellt werden. Anhand der Berichtes oder einer Mehrzahl von Berichten kann beispielsweise die Zuverlässigkeit einer Bedienperson der Flächenbearbeitungsvorrichtung kontrolliert werden.
- Übermittlung einer Mitteilung und Zuweisen des der Flächenbearbeitungsvorrichtung zugewiesenen Bearbeitungsauftrages an eine weitere Flächenbearbeitungsvorrichtung bzw. eine Bedienperson der weiteren Flächenbearbeitungsvorrichtungen. Um sicherzustellen, dass der Bearbeitungsauftrag möglichst rechtzeitig vor dem Auftragserledigungszeitpunkt abgearbeitet werden kann, kann die Empfangseinheit der Flächenbearbeitungsvorrichtung bzw. deren Bedienperson diesen Bearbeitungsauftrag zuweisen.

Die vorstehend genannten Handlungen werden von der Empfangseinheit vorzugsweise ohne Zutun eines Benutzers vorgenommen, beispielsweise ohne Zutun der Aufsichtsperson.

Günstig ist es, wenn die Flächenbearbeitungsvorrichtung an die Empfangseinheit eine weitere Mitteilung betreffend die Abarbeitung des Bearbeitungsauftrages übermittelt, insbesondere dass die Mitteilung von der Flächenbearbeitungsvorrichtung selbsttätig ohne Zutun einer Bedienperson der Flächenbearbeitungsvorrichtung übermittelt wird. Wenn der Bearbeitungsauftrag abgeschlossen ist, kann eine diesbezügliche weitere Mitteilung an die Empfangseinheit übermittelt werden. Der Abschluss des Bearbeitungsauftrages kann dadurch von der Empfangseinheit erfasst und festgestellt werden, ob dieser vor oder nach dem Auftragserledigungszeitpunkt liegt.

Beispielsweise wird die weitere Mitteilung bei Außerbetriebsetzung der Flächenbearbeitungsvorrichtung übermittelt. Die weitere Mitteilung umfasst und/oder erfordert beispielsweise eine Zeitinformation betreffend den Zeitpunkt der Außerbetriebssetzung, etwa in Form eines Zeitstempels.

Wie bereits erwähnt ist günstigerweise vorgesehen, dass an der Empfangseinheit festgestellt wird, ob der Zeitpunkt der Abarbeitung des Bearbeitungsauftrages nach dem Auftragserledigungszeitpunkt liegt. Dadurch ist es möglich zu ermitteln, ob selbst bei Inbetriebnahme oder Inbetriebsetzung der Flächenbearbeitungsvorrichtung spätestens zum Betriebsaufnahmezeitpunkt die Abarbeitung des Bearbeitungsauftrages länger als erwartet gedauert hat. Beispielsweise kann anhand dieser Information die erwartete Zeitdauer für die Abarbeitung verlängert und dementsprechend ein neuer Betriebsaufnahmezeitpunkt vorgegeben werden.

Von Vorteil ist es, wenn eine Meldung, dass der Zeitpunkt der Abarbeitung nach dem Auftragserledigungszeitpunkt liegt, an eine Aufsichtsperson der Flächenbearbeitungsvorrichtung ergeht und/oder wenn ein Bericht erstellt wird, der einen Eintrag über die verzögerte Abarbeitung des Bearbeitungsauftrages durch die Flächenbearbeitungsvorrichtung umfasst. Die Meldung und/oder der Bericht können die Aufsichtsperson oder deren Auftraggeber dazu veranlassen, die erwartete Zeit zur Abarbeitung zu korrigieren und zum Beispiel den Betriebsaufnahmezeitpunkt nach vorne zu verlegen.

Günstig ist es, wenn von einer Aufsichtsperson Vorgaben des spätestmöglichen Betriebsaufnahmezeitpunktes, des spätestmöglichen Auftragserledigungszeitpunktes und/oder eines dem Betriebsaufnahmezeitpunkt vorgelagerten Vorlaufzeitraumes über eine Eingabeschnittstelle bereitgestellt werden.

Die Empfangseinheit kann eine Eingabeschnittstelle umfassen oder mit einer solchen Eingabeschnittstelle gekoppelt sein.

Die Eingabeschnittstelle kann vorzugsweise ein Internetportal bereitstellen, aufweisen oder als solches ausgebildet sein, über das die Vorgaben bereitgestellt werden. Der Aufsichtsperson ist dadurch auf benutzerfreundliche und einfache Weise die Möglichkeit gegeben, entsprechende Vorgaben bereitzustellen.

Die Vorgaben können für eine individuelle (eine bestimmte) Flächenbearbeitungsvorrichtung, zwei oder mehr Flächenbearbeitungsvorrichtungen desselben Typs oder unterschiedlichen Typs und/oder für zwei oder mehr in einem gemeinsamen vorgegebenen oder vorgebbaren Einsatzgebiet eingesetzten Flächenbearbeitungsvorrichtungen erfolgen. Beispielsweise erfolgen die Vorgaben pro Flächenbearbeitungsvorrichtung, pro Bearbeitungsgruppe, wobei jede Bearbeitungsgruppe beispielsweise zwei oder mehr Flächenbearbeitungsvorrichtungen desselben Typs einsetzt und/oder für ein Einsatzgebiet, bei dem es sich etwa um ein zu reinigendes Gebäude oder um eine Niederlassung des Betreibers der Flächenbearbeitungsvorrichtung handelt. Denkbar ist auch, dass die Vorgaben für sämtliche Flächenbearbeitungsvorrichtungen des Betreibers erfolgen.

Von Vorteil ist es, wenn ein Bericht erstellt wird über mindestens eine Flächenbearbeitungsvorrichtung, der mindestens eines der folgenden umfasst:
- eine Feststellung, dass ein der mindestens einen Flächenbearbeitungsvorrichtung zugeordneter Bearbeitungsauftrag nicht oder nicht vor dem Auftragserledigungszeitpunkt abgearbeitet wurde. Darauf wurde bereits vorstehend eingegangen.
- Den Grund hierfür, sofern dies auf eine technische Ursache zurückzuführen ist, insbesondere einen Defekt der Flächenbearbeitungsvorrichtung. Es kann vorgesehen sein, dass die Flächenbearbeitungsvorrichtung selbsttätig oder mit Zutun einer Bedienperson eine Mitteilung an die Empfangseinheit übermittelt, dass ein Defekt vorliegt und insbesondere welcher Art der Defekt ist. Eine entsprechende Mitteilung kann beispielsweise auch auf Aufforderung durch die Empfangseinheit gesendet werden. Dies erfolgt zum Beispiel dann, wenn bis zum Betriebsaufnahmezeitpunkt keine Mitteilung betreffend den Betrieb der Flächenbearbeitungsvorrichtung übermittelt worden ist. Vorstehende Informationen im Bericht erlauben es dem Betreiber der Flächenbearbeitungsvorrichtung, möglichst zeitnah eine Reparatur für dieselbe auszulösen oder Ersatz für dieselbe zu beschaffen. Ferner kann Einfluss auf die Auftragsplanung genommen werden, indem ein der Flächenbearbeitungsvorrichtung zugewiesener Bearbeitungsauftrag einer anderen Flächenbearbeitungsvorrichtung zugewiesen wird.

- Vorgesehene Arbeitszeiten der mindestens einen Flächenbearbeitungsvorrichtung, insbesondere den Betriebsaufnahmezeitpunkt, den Auftragserledigungszeitpunkt und/oder ein dem Betriebsaufnahmezeitpunkt vorgelagerter Vorlaufzeitraum sowie der Flächenbearbeitungsvorrichtung zugewiesene Bearbeitungsaufträge. Eine Aufsichtsperson kann dadurch in übersichtlicher Weise die geplanten Einsätze der mindestens einen Flächenbearbeitungsvorrichtung einsehen.
- Tatsächliche Arbeitszeiten der mindestens einen Flächenbearbeitungsvorrichtung, insbesondere tagesabhängige Betriebszeit (zum Beispiel Betriebsstunden pro Tag und Zeitraum) oder ein tagesabhängiges Betriebsintervall (zum Beispiel pro Tag und pro Zeitraum).

Der Bericht wird vorzugsweise an einer Ausgabeschnittstelle bereitgestellt, die ein Internetportal bereitstellt, aufweist oder als solches ausgebildet ist. Bei der Ausgabeschnittstelle handelt es sich insbesondere um die vorstehend erwähnte Eingabeschnittstelle.

Wie bereits erwähnt kann vorgesehen sein, dass als Flächenbearbeitungsvorrichtung eine selbstfahrende und selbstlenkende Flächenbearbeitungsvorrichtung verwendet wird.

Insbesondere wird das Verfahren bei einer Flächenreinigungsvorrichtung angewendet, speziell bei einer Bodenreinigungsvorrichtung.

Beispielsweise handelt es sich bei der Flächenreinigungsvorrichtung um eine Kehrmaschine, eine Schrubbmaschine, eine Saugmaschine, eine Kehrsaugmaschine oder ein Räumfahrzeug. Die Flächenreinigungsvorrichtung kann eine Nachlauf-Vorrichtung (walk-behind) oder eine Aufsitz-Vorrichtung sein (rideon). Die Flächenreinigungsvorrichtung kann beispielsweise ein Strahlgerät sein, beispielsweise ein Fluidstrahlgerät oder ein Partikelstrahlgerät, zum Beispiel ein Hochdruckreinigungsgerät, ein Trockeneisstrahlgerät oder ein Sandstrahlgerät.

Die mindestens eine Funktionseinrichtung einer Flächenreinigungsvorrichtung kann beispielsweise eine Antriebseinrichtung, eine Reinigungsmitteldosiereinrichtung, eine Schmutzaufnahmeeinrichtung, eine Druckerzeugungseinrichtung oder eine Heizeinrichtung sein.

Wie eingangs erwähnt, betrifft die Erfindung auch ein Informationssystem zur Durchführung des Verfahrens. Der Erfindung liegt die Aufgabe zugrunde, ein Informationssystem zur Durchführung des Verfahrens bereitzustellen.

Diese Aufgabe wird erfindungsgemäß durch ein Informationssystem mit den Merkmalen von Anspruch 11 gelöst.

Unter Einsatz des Informationssystems können die bereits im Zusammenhang mit der Erläuterung des erfindungsgemäßen Verfahrens erzielbaren Vorteile erzielt werden, so dass diesbezüglich auf voranstehende Erläuterungen verwiesen werden kann.

Mitteilungen von der Flächenbearbeitungsvorrichtung an die Empfangseinheit werden vorzugsweise drahtlos übertragen. Die Übertragung kann unter Einsatz aller möglichen, dem Fachmann geläufigen Technologien, Kommunikationsnetze und Protokolle erfolgen. Beispielsweise werden Mitteilungen über ein fernreichweitiges Telekommunikationsnetzwerk übertragen.

Nachfolgend wird auf vorteilhafte Ausführungsformen des erfindungsgemäßen Informationssystems eingegangen. In Bezug auf deren Vorteile kann auf vorstehende Erläuterungen zu vorteilhaften Ausführungsbeispielen des erfindungsgemäßen Verfahrens verwiesen werden.

Vorzugsweise ist an der Empfangseinheit feststellbar, dass die Abarbeitung des Bearbeitungsauftrags unter der Annahme, dass der Betrieb der Flächenbearbeitungsvorrichtung fortgesetzt wird, vor dem Auftragserledigungszeitpunkt abgeschlossen sein wird.

Günstigerweise ist die Mitteilung von der Flächenbearbeitungsvorrichtung ohne vorherige Aufforderung der Empfangseinheit zur Mitteilung an diese übermittelbar, insbesondere ist die Mitteilung von der Flächenbearbeitungsvorrichtung selbsttätig ohne Zutun einer Bedienperson der Flächenbearbeitungsvorrichtung übermittelbar.

Bevorzugt ist die Mitteilung von der Flächenbearbeitungsvorrichtung zum Betriebszeitpunkt übermittelbar.

Günstig ist es, wenn die Mitteilung bei Inbetriebnahme oder Inbetriebsetzung der Flächenbearbeitungsvorrichtung an die Empfangseinheit übermittelbar ist.

Von Vorteil ist es, wenn die Mitteilung mindestens eine der folgenden Informationen umfasst und/oder erfordert:
- Die Flächenbearbeitungsvorrichtung ist eingeschaltet;
- eine Zeitinformation betreffend den Einschaltzeitpunkt;
- mindestens eine Funktionseinheit der Flächenbearbeitungsvorrichtung ist in Betrieb;
- die Flächenbearbeitungsvorrichtung wird bewegt.

Günstig ist es, wenn an der Empfangseinheit feststellbar ist, ob der Betriebszeitpunkt innerhalb eines dem Betriebsaufnahmezeitpunkt vorgelagerten, hinsichtlich seiner Dauer vorgegebenen oder vorgebbaren Vorlaufzeitraumes liegt.

Es kann vorgesehen sein, dass die Mitteilung betreffend den Betrieb der Flächenbearbeitungsvorrichtung nur als solche angesehen wird, wenn der Betriebszeitpunkt innerhalb des Vorlaufzeitraumes liegt.

Günstig ist es, wenn in dem Fall, dass eine Mitteilung der Flächenbearbeitungsvorrichtung betreffend deren Betrieb an die Empfangseinheit bis zum Betriebsaufnahmezeitpunkt unterbleibt, von der Empfangseinheit mindestens eines der folgenden vorgenommen werden kann:
- Übermitteln einer Meldung an eine Aufsichtsperson der Flächenbearbeitungsvorrichtung;
- Erstellen eines Berichtes, der die fehlende oder verspätete Abarbeitung des Bearbeitungsauftrages durch die Flächenbearbeitungsvorrichtung umfasst;
- Übermitteln einer Mitteilung und Zuweisen des der Flächenbearbeitungsvorrichtung zugewiesenen Bearbeitungsauftrages an eine weitere Flächenbearbeitungsvorrichtung bzw. eine Bedienperson der weiteren Flächenbearbeitungsvorrichtung.

Es kann vorgesehen sein, dass die vorstehend genannten Handlungen von der Empfangseinheit ohne Zutun eines Benutzers, beispielsweise ohne Zutun einer Aufsichtsperson vorgenommen werden können.

Vorteilhafterweise ist von der Flächenbearbeitungsvorrichtung an die Empfangseinheit eine weitere Mitteilung betreffend die Abarbeitung des Bearbeitungsauftrages übermittelbar, insbesondere ist die Mitteilung von der Flächenbearbeitungsvorrichtung bevorzugt selbsttätig ohne Zutun einer Bedienperson der Flächenbearbeitungsvorrichtung übermittelbar.

Die weitere Mitteilung ist günstigerweise bei Außerbetriebsetzung der Flächenbearbeitungsvorrichtung übermittelbar.

An der Empfangseinheit ist bevorzugt feststellbar, ob der Zeitpunkt der Abarbeitung des Bearbeitungsauftrages nach dem Auftragserledigungszeitpunkt liegt.

Günstig ist es, wenn eine diesbezügliche Meldung an eine Aufsichtsperson der Flächenbearbeitungsvorrichtung ergeht und/oder wenn ein Bericht erstellbar ist, der einen Eintrag über die verzögerte Abarbeitung des Bearbeitungsauftrages durch die Flächenbearbeitungsvorrichtung umfasst.

Von Vorteil ist es, wenn von einer Aufsichtsperson über eine Eingabeschnittstelle Vorgaben des spätestmöglichen Betriebsaufnahmezeitpunktes, des spätestmöglichen Auftragserledigungszeitpunktes und/oder eines dem Betriebsaufnahmezeitpunkt vorgelagerten Vorlaufzeitraumes bereitstellbar sind.

Die Eingabeschnittstelle weist vorzugsweise ein Internetportal auf, stellt ein solches bereit oder ist als solches ausgebildet, über das die Vorgaben bereitstellbar sind.

Die Vorgaben sind bevorzugt für eine individuelle Flächenbearbeitungsvorrichtung, zwei oder mehr Flächenbearbeitungsvorrichtungen desselben Typs oder unterschiedlichen Typs und/oder für zwei oder mehr in einem gemeinsamen vorgegebenen oder vorgebaren Einsatzgebiet eingesetzten Flächenbearbeitungsvorrichtungen bereitstellbar.

Von Vorteil ist es, wenn ein Bericht erstellbar ist über mindestens eine Flächenbearbeitungsvorrichtung, der mindestens eines der folgenden umfasst:
- eine Feststellung, dass ein der mindestens einen Flächenbearbeitungsvorrichtung zugewiesener Bearbeitungsauftrag nicht oder nicht vor dem Auftragserledigungszeitpunkt abgearbeitet wurde;
- den Grund hierfür, sofern dies auf eine technische Ursache zurückzuführen ist, insbesondere einen Defekt der Flächenbearbeitungsvorrichtung;
- vorgesehene Arbeitszeiten der mindestens einen Flächenbearbeitungsvorrichtung, insbesondere den Betriebsaufnahmezeitpunkt, den Auftragserledigungszeitpunkt und/oder ein dem Betriebsaufnahmezeitpunkt vorgelagerter Vorlaufzeitraum sowie der Flächenbearbeitungsvorrichtung zugewiesene Bearbeitungsaufträge;
- tatsächliche Arbeitszeiten der mindestens einen Flächenbearbeitungsvorrichtung, insbesondere eine tagesabhängige Betriebszeit oder ein tagesabhängiges Betriebsintervall.

Vorzugsweise ist der Bericht an einer Ausgabeschnittstelle bereitstellbar, die ein Internetportal bereitstellt, aufweist oder als solches ausgebildet ist.

Die Flächenbearbeitungsvorrichtung kann eine selbstfahrende und selbstlenkende Flächenbearbeitungsvorrichtung sein.

Bei der Flächenbearbeitungsvorrichtung kann es sich um eine Flächenreinigungsvorrichtung handeln, insbesondere um eine Bodenreinigungsvorrichtung.

Die nachfolgende Beschreibung vorteilhafter Ausführungsformen der Erfindung dient im Zusammenhang mit der Zeichnung der näheren Erläuterung der Erfindung. Es zeigen:
- Figur 1:: eine Flächenbearbeitungsvorrichtung in Gestalt eines Bodenreinigungsgerätes in schematischer Darstellung;
- Figur 2:: eine schematische Darstellung eines erfindungsgemäßen Informationssystems, umfassend das Bodenreinigungsgerät aus Figur 1, zur Durchführung eines erfindungsgemäßen Verfahrens und
- Figur 3:: in schematischer Darstellung einen Zeitstrahl, anhand dessen die Abarbeitung eines der Bodenreinigungsvorrichtung aus Figur 1 zugewiesenen Bearbeitungsauftrages erläutert wird.

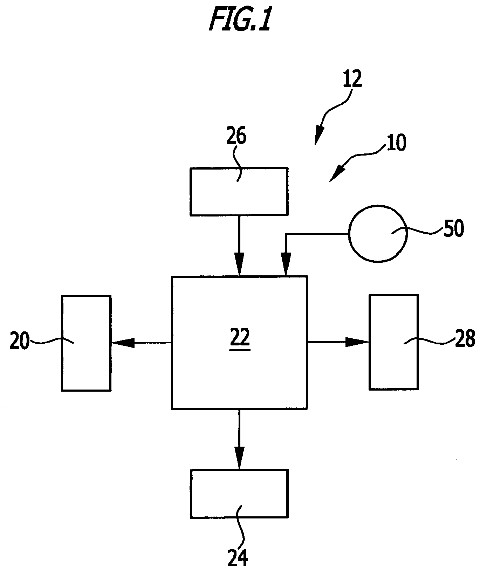

Figur 1 zeigt in schematischer Darstellung ein mit dem Bezugszeichen 10 belegtes Bodenreinigungsgerät, das eine Flächenbearbeitungsvorrichtung 12 einer mit dem Bezugszeichen 14 belegten vorteilhaften Ausführungsform eines erfindungsgemäßen Informationssystems ist. Das Informationssystem 14 erlaubt die Überwachung eines Einsatzes des Bodenreinigungsgerätes 10, dem ein zu erledigender Bearbeitungsauftrag zugewiesen ist, nämlich ein Reinigungsauftrag zur Reinigung einer in der Zeichnung nicht dargestellten Bodenfläche.

Das Bodenreinigungsgerät 10 ist beispielsweise eine Saugmaschine, eine Kehrmaschine, eine Kehrsaugmaschine oder eine Schrubbmaschine.

Das Bodenreinigungsgerät 10 kann ein Nachlauf-(walk-behind)-Gerät sein oder ein Aufsitz-(ride-on)-Gerät sein, das von einer Bedienperson 16 geführt ist.

Das Informationssystem 14 kann weitere Flächenbearbeitungsvorrichtungen umfassen, insbesondere Bodenreinigungsgeräte. Beispielsweise sind zwei weitere Bodenreinigungsgeräte 10' und 10" baugleich zum Bodenreinigungsgerät 10 vorhanden, die von Bedienpersonen 16' bzw. 16" bedient werden können.

Das Informationssystem 14 kann darüber hinaus weitere und andersartige Flächenbearbeitungsvorrichtungen umfassen. Beispielhaft sind zwei als Bodenreinigungsgeräte 18, 18' ausgebildete Flächenbearbeitungsvorrichtungen gezeigt. Die Bodenreinigungsgeräte 18, 18' sind selbstfahrend und selbstlenkend, wodurch eine Bodenfläche autonom gereinigt werden kann, ohne dass eine Bedienperson präsent ist.

Das Bodenreinigungsgerät 10 umfasst mindestens eine Funktionseinheit 20, zum Beispiel ein Reinigungswerkzeug, eine Druckerzeugungseinrichtung, eine Reinigungsmitteldosiereinrichtung, eine Schmutzaufnahmevorrichtung oder eine Antriebseinrichtung. Die Funktionseinheit 20 ist von einer Steuereinheit 22 des Bodenreinigungsgerätes 10 ansteuerbar. Die Steuereinheit 22 kann ferner ein Fahrwerk 24 zum Verfahren auf der zu bearbeitenden Bodenfläche steuern. In das Fahrwerk 24 kann eine Antriebseinrichtung integriert sein.

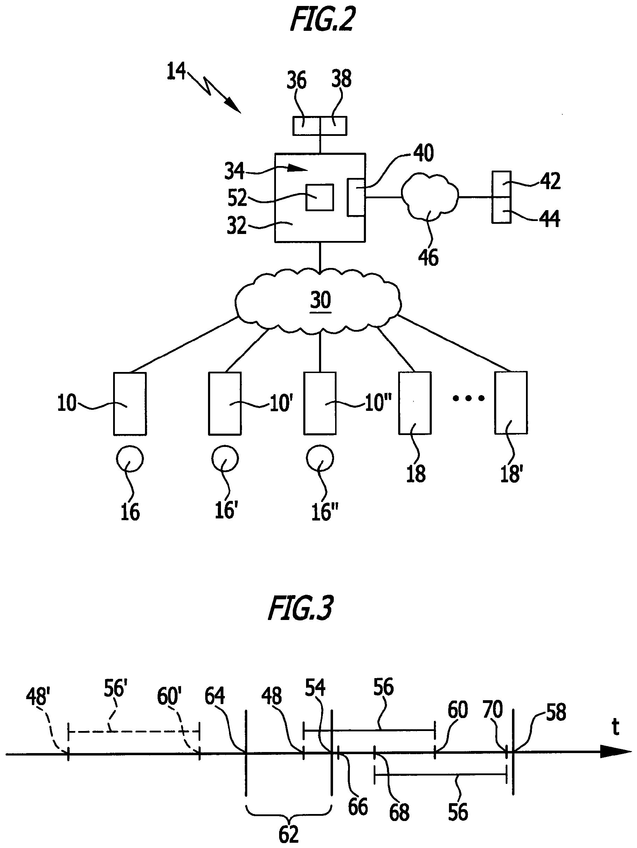

Ein Benutzer kann über eine mit der Steuereinheit 22 gekoppelte Bedieneinheit 26 das Bodenreinigungsgerät 10 steuern. Ferner umfasst das Bodenreinigungsgerät 10 eine von der Steuereinheit 22 ansteuerbare Kommunikationseinheit 28. Über die Kommunikationseinheit 28 können vom Bodenreinigungsgerät 10 Mitteilungen drahtlos übermittelt werden. Die Übermittlung erfolgt beispielsweise über ein mit Figur 2 beispielhaft dargestelltes Kommunikationsnetz 30, zum Beispiel ein langreichweitiges Telekommunikationsnetz. Alternativ oder ergänzend kann als Kommunikationsnetz 30 das Internet zum Einsatz kommen. Auch die weiteren Bodenreinigungsgeräte 10', 10", 18, 18', ... des Informationssystems 14 können über ein Kommunikationsnetz 30 oder mehrere Kommunikationsnetze Mitteilungen drahtlos übermitteln.

Das Informationssystem 14 umfasst eine räumlich vom Bodenreinigungsgerät 10 getrennte externe Empfangseinheit 32, die ebenfalls mit dem Kommunikationsnetz 30 gekoppelt ist und von der Mitteilungen empfangen werden können. Die Empfangseinheit 32 wird beispielsweise gebildet oder umfasst von einer externen Datenverarbeitungseinrichtung 34, insbesondere in Gestalt eines Computers oder Servers. Die Datenverarbeitungseinrichtung 34 ist beispielsweise im Besitz oder unter der Verwaltung eines Betreibers des Informationssystems 14 und damit des Bodenreinigungsgerätes 10.

Die Empfangseinheit 32 kann eine Eingabeeinheit 36 und eine Ausgabeeinheit 38 aufweisen zur Entgegennahme von Eingaben bzw. zum Bereitstellen von Ausgaben der Empfangseinheit 32. Außerdem kann die Empfangseinheit 32 eine Eingabe- und/oder Ausgabeschnittstelle 40 umfassen. Über die Eingabe- und/oder Ausgabeschnittstelle 40 kann eine räumlich von der Empfangseinheit 32 angeordnete Eingabeeinheit 42 bzw. eine räumlich entfernte Ausgabeeinheit 44 mit der Empfangseinheit 32 gekoppelt werden. Die Kopplung erfolgt vorliegend über ein Kommunikationsnetz 46. Beim Kommunikationsnetz 46 handelt es sich beispielsweise um das Internet oder um ein Telekommunikationsnetz.

Wie bereits erwähnt, ist dem Bodenreinigungsgerät 10 ein Reinigungsauftrag zugewiesen. Darunter wird vorliegend insbesondere verstanden, dass die Bedienperson 16 einen Auftrag erhält, eine Bodenfläche unter Einsatz des Bodenreinigungsgerätes 10 zu reinigen. Die Bedienperson 16 kann das Bodenreinigungsgerät 10 zu diesem Zweck in Betrieb nehmen und den Reinigungsauftrag abarbeiten.

Die Funktionsweise des Informationssystems 14 und der Ablauf eines bevorzugten Ausführungsbeispiels des erfindungsgemäßen Verfahrens werden nachfolgend insbesondere unter Verweis auf Figur 3 erläutert.

Vorliegend wird zunächst angenommen, dass die Bedienperson 16 das Bodenreinigungsgerät 10 zu einem Betriebszeitpunkt 48 zur Abarbeitung des Reinigungsauftrages in Betrieb nimmt. Das Bodenreinigungsgerät 10 sendet eine diesbezügliche Mitteilung betreffend den Betrieb an die Empfangseinheit 32. Bestandteil der Mitteilung ist eine Zeitinformation betreffend den Einschaltzeitpunkt des Bodenreinigungsgerätes 10, beispielsweise in Form eines Zeitstempels.

Die Mitteilung wird beim Betriebszeitpunkt 48 erst gesendet, wenn mindestens eine Funktionseinheit in Betrieb ist, beispielsweise ein Reinigungswerkzeug. Außerdem wird die Mitteilung erst gesendet, wenn sich das Bodenreinigungsgerät 10 bewegt. Dies kann beispielsweise anhand von odometrischen Daten ermittelt werden, welche der Steuereinheit 22 vom Fahrwerk 24 bereitgestellt werden. Ergänzend oder alternativ kann das Bodenreinigungsgerät 10 eine mit der Steuereinheit 22 gekoppelte oder in diese integrierte Sensoreinheit 50 umfassen, welche zum Beispiel einen Positionssensor (etwa einen GPS-Sensor) aufweisen kann. Die vom Bodenreinigungsgerät 10 übermittelte Mitteilung kann eine Zeitinformation, zum Beispiel einen Zeitstempel, betreffend die Inbetriebnahme der Funktionseinheit 20 oder die Aufnahme der Bewegung des Bodenreinigungsgerätes 10 umfassen.

Im vorliegenden Fall entspricht der Betriebszeitpunkt 48 demjenigen Zeitpunkt, zu dem die vorstehend genannten Voraussetzungen kumulativ erfüllt sind. Es kann jedoch vorgesehen sein, dass weitere Voraussetzungen oder weniger Voraussetzungen zum Versand der Mitteilung über den Betrieb an die Empfangseinheit 32 erforderlich sind. Beispielsweise reicht es hierfür aus, dass das Bodenreinigungsgerät 10 eingeschaltet wird.

Die vom Bodenreinigungsgerät 10 übersandte Mitteilung wird von der Empfangseinheit 32 ausgewertet. Zu diesem Zweck kann die Empfangseinheit 32 ein Auswertglied 52 aufweisen. Das Auswertglied 52 kann ein Rechenglied sein, beispielsweise ein Mikroprozessor mit darauf hinterlegter oder von diesem ausgeführter Software.

Die Empfangseinheit 32 ermittelt, ob der Betriebszeitpunkt 48 vor oder spätestens an einem spätestmöglichen Betriebsaufnahmezeitpunkt 54 liegt. Im vorliegenden Fall ist der Betriebsaufnahmezeitpunkt 54 so vorgegeben, dass unter Annahme einer erwarteten Dauer 56 zur Abarbeitung des Reinigungsauftrags sichergestellt ist, dass der Reinigungsauftrag spätestens zu einem Auftragserledigungszeitpunkt 58 abgearbeitet ist. Die Zeitdauer vom Betriebsaufnahmezeitpunkt 54 zum nachfolgenden Auftragserledigungszeitpunkt 58 ist dementsprechend mindestens so groß wie die erwartete Dauer 56 für die Abarbeitung des Reinigungsauftrages. Vorzugsweise ist die Zeitdauer größer als die Dauer 56, worauf nachfolgend noch eingegangen wird.

Im vorliegenden Fall stellt die Empfangseinheit 32 fest, dass der Betriebszeitpunkt 48 vor dem Betriebsaufnahmezeitpunkt 54 liegt und das Bodenreinigungsgerät 10 vor diesem in Betrieb ist. Dementsprechend stellt die Empfangseinheit 32 fest, dass bei der Fortsetzung des Betriebes des Bodenreinigungsgerätes 10 der Reinigungsauftrag vor dem Auftragserledigungszeitpunkt 58 abgeschlossen sein wird. Im vorliegenden Beispiel ist der Reinigungsauftrag nach der erwarteten Reinigungsdauer 56 zu einem Abschlusszeitpunkt 60 vor dem Auftragserledigungszeitpunkt 58 abgeschlossen.

Die Empfangseinheit 32 kann ferner überprüfen, ob der Betriebszeitpunkt 48 innerhalb eines Vorlaufzeitraumes 62 liegt, welcher an einem Startzeitpunkt 64 dem Betriebsaufnahmezeitpunkt 54 vorgelagert beginnt. Stellt die Empfangseinheit 32 fest, dass das Bodenreinigungsgerät 10 während des Vorlaufzeitraumes 62 zumindest einmal in Betrieb war und dementsprechend den Reinigungsauftrag abarbeitet, kann die Empfangseinheit 32 mit größerer Gewissheit feststellen, dass bei Ausbleiben außergewöhnlicher Umstände der Reinigungsauftrag nach Ablauf der erwarteten Dauer 56 abgeschlossen und vor dem Auftragserledigungszeitpunkt 58 beendet ist.

Nachfolgend wird angenommen, dass die Empfangseinheit 32 aufgrund der Mitteilung des Bodenreinigungsgerätes 10 feststellt, dass dieses zu einem Betriebszeitpunkt 48' vor dem Vorlaufzeitraum 62 zur Abarbeitung des Reinigungsauftrages in Betrieb ist. Unter Umständen ist der Reinigungsauftrag zu einem Abschlusszeitraum 60' sogar vor dem Vorlaufzeitraum 62 abgeschlossen.

Liegt der Betriebszeitpunkt 48' vor dem Vorlaufzeitraum 62, kann vorgesehen sein, dass die Empfangseinheit 32 die Mitteilung über den Betrieb des Bodenreinigungsgerätes 10 nicht als solche ansieht. Mit anderen Worten kann die Empfangseinheit 32 annehmen, dass keine Mitteilung betreffend den Betrieb vor oder spätestens am Betriebsaufnahmezeitpunkt 54 vorliegt. Dies erlaubt es zu berücksichtigen, dass sich nach Abschluss eines Reinigungsauftrages, beispielsweise zum Abschlusszeitpunkt 60', der Zustand der gereinigten Bodenfläche ändert. Es kann dementsprechend erwartet werden, dass sich bis zum Auftragserledigungszeitpunkt 58 der Zustand der Bodenfläche so verschlechtert hat, dass der Reinigungsauftrag als nicht oder nur unzureichend ausgeführt angesehen wird. Um eine mögliche Zustandsänderung nach Abschluss des Reinigungsauftrages zu berücksichtigen, überprüft die Empfangseinheit 32 daher, ob der Betriebszeitpunkt 48 im Vorlaufzeitraum 62 liegt.

Nachfolgend wird angenommen, dass am Betriebsaufnahmezeitpunkt 54 keine Mitteilung des Bodenreinigungsgerätes 10 betreffend den Betrieb und die Abarbeitung des Reinigungsauftrages vorliegt. Die Empfangseinheit 32 kann selbsttätig eine Mitteilung an eine weitere Flächenbearbeitungsvorrichtung übermitteln mit dem Ziel, eine Abarbeitung des Reinigungsauftrages vor dem Auftragserledigungszeitpunkt 58 sicherzustellen. Um eine entsprechende Rüstzeit und/oder Transportzeit der weiteren Flächenbearbeitungsvorrichtung zuzulassen ist es daher günstig, wenn die Dauer vom Betriebsaufnahmezeitpunkt 54 zum Auftragserledigungszeitpunkt 58 größer ist als die erwartete Zeit zur Abarbeitung des Reinigungsauftrages.

Vorliegend ergeht beispielsweise eine Mitteilung der Empfangseinheit 32 an die Bedienperson 16', mit dem Bodenreinigungsgerät 10' den Reinigungsauftrag des Bodenreinigungsgerätes 10 auszuführen. Die Mitteilung ergeht vorliegend zu einem Mitteilungszeitpunkt 66 alsbald nach dem Betriebsaufnahmezeitpunkt 54.

Unter Einsatz des Bodenreinigungsgerätes 10' wird der Reinigungsauftrag ausgeführt. Ein entsprechender Betriebszeitpunkt 68 wird der Empfangseinheit 32 vom Bodenreinigungsgerät 10' selbsttätig mitgeteilt. Der Reinigungsauftrag wird vorliegend in der erwarteten Dauer 56 ausgeführt und ist zu einem Abschlusszeitpunkt 70 noch vor dem Auftragserledigungszeitpunkt 58 abgeschlossen. Der Abschlusszeitpunkt 70 (und entsprechend der Abschlusszeitpunkt 60) werden vom Bodenreinigungsgerät 10' (bzw. 10) selbsttätig bei Außerbetriebsetzung an die Empfangseinheit 32 gemeldet.

Durch die Vergabe des noch nicht abgearbeiteten Reinigungsauftrages vom Bodenreinigungsgerät 10 an das Bodenreinigungsgerät 10' kann sichergestellt werden, dass der Reinigungsauftrag möglichst bis zum Auftragserledigungszeitpunkt 58 ausgeführt ist. Eine entsprechende Anforderung kann von einem Auftraggeber an den Betreiber des Informationssystems 14 gestellt sein. Beispielsweise entspricht der Auftragserledigungszeitpunkt 58 einem Zeitpunkt, zu dem ein Gebäude geöffnet wird und zu dem das Vorhandensein von Flächenbearbeitungsvorrichtungen im Gebäude unerwünscht ist.

Liegt der Empfangseinheit 32 wie vorstehend erläutert zum Betriebsaufnahmezeitpunkt 54 keine Mitteilung des Bodenreinigungsgerätes 10 betreffend den Betrieb vor, wird ergänzend oder alternativ eine Meldung an eine Aufsichtsperson des Informationssystems 14 übermittelt. Die Meldung wird zum Beispiel an der Ausgabeeinheit 38 oder der Ausgabeeinheit 44 ausgegeben. Die Aufsichtsperson kann auch, ohne dass dies von der Empfangseinheit 32 selbsttätig vorgenommen wird, den Reinigungsauftrag anderweitig zuweisen, beispielsweise der Bedienperson 16'. Es kann auch vorgesehen sein, dass die Aufsichtsperson lediglich über den Vorfall informiert wird, ohne dass sie zur Vergabe des Reinigungsauftrages eingreifen muss.

Ergänzend oder alternativ erstellt die Empfangseinheit 32 einen Bericht, in dem die fehlende Abarbeitung des Reinigungsauftrages durch das Bodenreinigungsgerät 10 enthalten ist. Ein entsprechender Bericht kann an den Ausgabeeinheiten 38 oder 44 dargestellt oder abgerufen werden, an eine Aufsichtsperson oder einen Auftraggeber für den Betreiber des Informationssystems 14 übermittelt oder von diesem eingesehen werden.

Die Empfangseinheit 32 kann in diesem Bericht oder einem andersartigen Bericht über das Informationssystem 14 beispielsweise folgende Sachverhalte mitteilen:
Der Bericht kann eine Feststellung enthalten, dass ein und gegebenenfalls welcher Reinigungsauftrag nicht vor dem Auftragserledigungszeitpunkt 58 abgearbeitet wurde. Dies kann allein aufgrund der Feststellung, ob eine jeweilige Flächenbearbeitungsvorrichtung spätestens zum Betriebsaufnahmezeitpunkt 54 und innerhalb des Vorlaufzeitraums 62 in Betrieb ist bzw. gewesen ist, ermittelt werden. Sofern das Nichtbearbeiten eines Reinigungsauftrages auf eine technische Ursache, beispielsweise einen Defekt einer Flächenbearbeitungsvorrichtung, zurückzuführen ist, kann der Bericht die entsprechende Ursache enthalten. Dies erlaubt es, eine Reparatur auszulösen oder die Flächenbearbeitungsvorrichtung zu ersetzen. Zur Feststellung der Ursache kann vorgesehen sein, dass die Empfangseinheit 32 eine entsprechende Anfrage bei der Flächenbearbeitungsvorrichtung 12 stellt oder dass die Flächenbearbeitungsvorrichtung 12 oder deren Bedienperson eine entsprechende Mitteilung an die Empfangseinheit 32 übermittelt.

Der Bericht kann ferner vorgesehene Arbeitszeiten einer jeweiligen Flächenbearbeitungsvorrichtung umfassen, beispielsweise den Betriebsaufnahmezeitpunkt, den Auftragserledigungszeitpunkt und/oder den Vorlaufzeitraum.

Ferner kann der Bericht tatsächliche Arbeitszeiten einer Flächenbearbeitungsvorrichtung umfassen, zum Beispiel eine tagesabhängige Betriebszeit oder eine tagesabhängiges Betriebsintervall.

Über die Eingabeeinheiten 36 und 42 kann eine Aufsichtsperson einen jeweiligen Betriebsaufnahmezeitpunkt 54, einen Auftragserledigungszeitpunkt 58 und einen Vorlaufzeitraum 62 vorgeben. Die Vorgabe erfolgt beispielsweise für eine individuelle Flächenbearbeitungsvorrichtung, für zwei oder mehr Flächenbearbeitungsvorrichtungen desselben Typs oder eines unterschiedlichen Typs und/oder für zwei oder mehr in einem gemeinsamen vorgegebenen oder vorgebbaren Einsatzgebiet (zum Beispiel einem Gebäude) eingesetzte Flächenbearbeitungsvorrichtungen. Beispielsweise werden die Vorgaben pro Bodenreinigungsgerät, pro Gruppe gleicher Bodenreinigungsgeräte, pro zu reinigendem Gebäude, pro Niederlassung des Betreibers des Informationssystems 14 oder für dessen gesamte Geräteflotte vorgegeben.

Von Vorteil ist es, wenn die Vorgabe über die Eingabeeinheit 42 und die Ausgabe eines Berichtes über die Ausgabeeinheit 44 über das Internet möglich ist. Zu diesem Zweck ist es günstig, wenn die Eingabe- und/oder Ausgabeschnittstelle 40 ein Internetportal bereitstellt, ein solches umfasst oder als solches ausgebildet ist. Eine entsprechende Applikation kann softwaremäßig in der Empfangseinheit 32 hinterlegt sein. Die Nutzung eines Internetportals sowohl für eine Aufsichtsperson als auch für einen Auftraggeber des Betreibers des Informationssystems 14 erweist sich als einfach und benutzerfreundlich.

Der Einsatz des Informationssystems 14 sowie die Durchführung des erfindungsgemäßen Verfahrens erlaubt dementsprechend, den Einsatz von Flächenbearbeitungsvorrichtungen, denen Reinigungsaufträge zugewiesen sind, auf bessere Weise zu überwachen. Insbesondere ist es auf bessere Weise möglich sicherzustellen, dass ein Reinigungsauftrag zu einem Auftragserledigungszeitpunkt 58 möglichst abgearbeitet ist. Den Anforderungen eines Auftraggebers kann dadurch in besserer Weise entsprochen werden. Durch die Möglichkeit, einen Reinigungsauftrag innerhalb des Informationssystems 14 anderweitig zu vergeben (insbesondere von der Empfangseinheit 32 selbsttätig), können Reinigungsaufträge in kürzerer Zeit und kundenorientierter abgearbeitet werden.

Von Vorteil erweist sich insbesondere eine von der jeweiligen Flächenbearbeitungsvorrichtung selbsttätig übermittelte Mitteilung an die Empfangseinheit 32 betreffend die Arbeit am Reinigungsauftrag bei der Inbetriebnahme. Wie erwähnt gibt es die Möglichkeit frühzeitig festzustellen, wenn ein Reinigungsauftrag möglicherweise nicht vor dem Auftragserledigungszeitpunkt 58 abgearbeitet werden kann, so dass erforderlichenfalls Gegenmaßnahmen eingeleitet werden können. Die Erstellung eines entsprechenden Berichtes dient ferner der Nachweisfunktion für den Betreiber des Informationssystems 14 seinem Auftraggeber gegenüber, dass Reinigungsaufträge tatsächlich abgearbeitet wurden.

## Patentansprüche

1. Verfahren zur Überwachung eines Einsatzes einer Flächenbearbeitungsvorrichtung, der ein Bearbeitungsauftrag zugewiesen ist, wobei die Flächenbearbeitungsvorrichtung (12) an eine externe Empfangseinheit (32) eine Mitteilung übermittelt, die den Betrieb der Flächenbearbeitungsvorrichtung (12) zu einem Betriebszeitpunkt (48) und damit die Abarbeitung des Bearbeitungsauftrages betrifft, **dadurch gekennzeichnet, dass** an der Empfangseinheit (32) festgestellt wird, ob der Betriebszeitpunkt (48) vor oder spätestens an einem vorgegebenen oder vorgebbaren spätestmöglichen Betriebsaufnahmezeitpunkt (54) liegt, wobei die Dauer vom Betriebsaufnahmezeitpunkt (54) bis zu einem vorgebbaren oder vorgegebenen spätestmöglichen Auftragserledigungszeitpunkt (58) mindestens so groß ist wie die erwartete Zeit zur Abarbeitung des Bearbeitungsauftrages.

2. Verfahren nach Anspruch 1, **dadurch gekennzeichnet, dass** an der Empfangseinheit festgestellt wird, dass die Abarbeitung des Bearbeitungsauftrages unter der Annahme, dass der Betrieb der Flächenbearbeitungsvorrichtung (12) fortgesetzt wird, vor dem Auftragserledigungszeitpunkt (58) abgeschlossen sein wird.

3. Verfahren nach Anspruch 1 oder 2, **dadurch gekennzeichnet, dass** für die Mitteilung mindestens eines der Folgenden gilt:
- die Mitteilung wird von der Flächenbearbeitungsvorrichtung (12) ohne vorherige Aufforderung der Empfangseinheit (32) zur Mitteilung an diese übertragen;
- die Mitteilung wird von der Flächenbearbeitungsvorrichtung (12) zum Betriebszeitpunkt (48) übermittelt;
- die Mitteilung wird bei Inbetriebnahme oder Inbetriebsetzung der Flächenbearbeitungsvorrichtung (12) an die Empfangseinheit (32) übermittelt.

4. Verfahren nach einem der voranstehenden Ansprüche, **dadurch gekennzeichnet, dass** die Mitteilung mindestens eine der folgenden Informationen umfasst und/oder erfordert:
- die Flächenbearbeitungsvorrichtung (12) ist eingeschaltet;
- eine Zeitinformation betreffend den Einschaltzeitpunkt;
- mindestens eine Funktionseinheit (20) der Flächenbearbeitungsvorrichtung (12) ist in Betrieb;
- die Flächenbearbeitungsvorrichtung (12) wird bewegt.

5. Verfahren nach einem der voranstehenden Ansprüche, **dadurch gekennzeichnet, dass** an der Empfangseinheit (32) festgestellt wird, ob der Betriebszeitpunkt (48) innerhalb eines dem Betriebsaufnahmezeitpunkt (54) vorgelagerten, hinsichtlich seiner Dauer vorgegebenen oder vorgebbaren Vorlaufzeitraumes (62) liegt, wobei die Mitteilung betreffend den Betrieb der Flächenbearbeitungsvorrichtung (12) insbesondere nur dann als solche angesehen wird, wenn der Betriebszeitpunkt (48) innerhalb des Vorlaufzeitraumes (62) liegt.

6. Verfahren nach einem der voranstehenden Ansprüche, **dadurch gekennzeichnet, dass** in dem Fall, dass eine Mitteilung der Flächenbearbeitungsvorrichtung (12) betreffend deren Betrieb an die Empfangseinheit (32) bis zum Betriebsaufnahmezeitpunkt (54) unterbleibt, von der Empfangseinheit (32) mindestens eines der Folgenden vorgenommen wird:
- Übermitteln einer Meldung an eine Aufsichtsperson der Flächenbearbeitungsvorrichtung (12);
- Erstellen eines Berichtes, der die fehlende oder verspätete Abarbeitung des Bearbeitungsauftrages durch die Flächenbearbeitungsvorrichtung (12) umfasst;
- Übermitteln einer Mitteilung und Zuweisen des der Flächenbearbeitungsvorrichtung (12) zugewiesenen Bearbeitungsauftrages an eine weitere Flächenbearbeitungsvorrichtung (12) bzw. eine Bedienperson (16) der weiteren Flächenbearbeitungsvorrichtung (12).

7. Verfahren nach einem der voranstehenden Ansprüche, **dadurch gekennzeichnet, dass** die Flächenbearbeitungsvorrichtung (12) an die Empfangseinheit (32) eine weitere Mitteilung betreffend die Abarbeitung des Bearbeitungsauftrages übermittelt, vorzugsweise dass an der Empfangseinheit (32) festgestellt wird, ob der Zeitpunkt der Abarbeitung (60) des Bearbeitungsauftrages nach dem Auftragserledigungszeitpunkt (58) liegt, und dass eine diesbezügliche Meldung an eine Aufsichtsperson der Flächenbearbeitungsvorrichtung (12) ergeht und/oder dass ein Bericht erstellt wird, der einen Eintrag über die verzögerte Abarbeitung des Bearbeitungsauftrages durch die Flächenbearbeitungsvorrichtung (12) umfasst.

8. Verfahren nach einem der voranstehenden Ansprüche, **dadurch gekennzeichnet, dass** von einer Aufsichtsperson Vorgaben des spätestmöglichen Betriebsaufnahmezeitpunktes (52), des spätestmöglichen Auftragserledigungszeitpunktes (58) und/oder eines dem Betriebsaufnahmezeitpunkt (54) vorgelagerten Vorlaufzeitraumes (62) über eine Eingabeschnittstelle (40) bereitgestellt werden.

9. Verfahren nach einem der voranstehenden Ansprüche, **dadurch gekennzeichnet, dass** ein Bericht erstellt wird über mindestens eine Flächenbearbeitungsvorrichtung (12), der mindestens eines der Folgenden umfasst:
- eine Feststellung, dass ein der mindestens einen Flächenbearbeitungsvorrichtung (12) zugeordneter Bearbeitungsauftrag nicht oder nicht vor dem Auftragserledigungszeitpunkt (54) abgearbeitet wurde;
- den Grund hierfür, sofern dies auf eine technische Ursache zurückzuführen ist, insbesondere einen Defekt an der Flächenbearbeitungsvorrichtung (12);
- vorgesehene Arbeitszeiten der mindestens einen Flächenbearbeitungsvorrichtung (12), insbesondere den Betriebsaufnahmezeitpunkt (54), den Auftragserledigungszeitpunkt (58) und/oder einen dem Betriebsaufnahmezeitpunkt (54) vorgelagerten Vorlaufzeitraum (62), sowie der Flächenbearbeitungsvorrichtung (12) zugewiesene Bearbeitungsaufträge;
- tatsächliche Arbeitszeiten der mindestens einen Flächenbearbeitungsvorrichtung (12), insbesondere tagesabhängige Betriebszeit oder ein tagesabhängiges Betriebsintervall.

10. Verfahren nach einem der voranstehenden Ansprüche, **dadurch gekennzeichnet, dass** als Flächenbearbeitungsvorrichtung (12) eine selbstfahrende und selbstlenkende Flächenbearbeitungsvorrichtung (12) verwendet wird und/oder dass das Verfahren bei einer Flächenreinigungsvorrichtung angewendet wird, insbesondere einer Bodenreinigungsvorrichtung (10).

11. Informationssystem zur Durchführung des Verfahrens nach einem der voranstehenden Ansprüche, umfassend eine Flächenbearbeitungsvorrichtung (12), der ein Bearbeitungsauftrag zugewiesen ist, und eine externe Empfangseinheit (32), wobei von der Flächenbearbeitungsvorrichtung (12) über eine Kommunikationsschnittstelle (28) an die Empfangseinheit (32) eine Mitteilung übermittelt wird, die den Betrieb der Flächenbearbeitungsvorrichtung (12) zu einem Betriebszeitpunkt (48) und damit die Abarbeitung des Bearbeitungsauftrages betrifft, **dadurch gekennzeichnet dass** an der Empfangseinheit festgestellt wird, ob der Betriebszeitpunkt (48) vor oder spätestens an einem vorgegebenen oder vorgebbaren spätestmöglichen Betriebsaufnahmezeitpunkt (54) liegt, wobei die Dauer vom Betriebsaufnahmezeitpunkt (54) bis zu einem vorgebbaren oder vorgegebenen spätestmöglichen Auftragserledigungszeitpunkt (58) mindestens so groß ist wie die erwartete Zeit zur Abarbeitung des Bearbeitungsauftrags.

12. Informationssystem nach Anspruch 11, **dadurch gekennzeichnet, dass** an der Empfangseinheit (32) festgestellt wird, dass die Abarbeitung des Bearbeitungsauftrages unter der Annahme, dass der Betrieb der Flächenbearbeitungsvorrichtung (12) fortgesetzt wird, vor dem Auftragserledigungszeitpunkt (58) abgeschlossen sein wird.

13. Informationssystem nach Anspruch 11 oder 12, **dadurch gekennzeichnet, dass** für die Mitteilung mindestens eines der Folgenden gilt:
- die Mitteilung wird von der Flächenbearbeitungsvorrichtung (12) ohne vorherige Aufforderung zur Mitteilung an diese übermittelt;
- die Mitteilung wird von der Flächenbearbeitungsvorrichtung (12) zum Betriebszeitpunkt (48) übermittelt;
- die Mitteilung wird bei Inbetriebnahme oder Inbetriebsetzung der Flächenbearbeitungsvorrichtung (12) an die Empfangseinheit (32) übermittelt.

14. Informationssystem nach einem der Ansprüche 11 bis 13, **dadurch gekennzeichnet, dass** die Mitteilung mindestens eine der folgenden Informationen umfasst und/oder erfordert:
- die Flächenbearbeitungsvorrichtung (12) ist eingeschaltet;
- eine Zeitinformation betreffend den Einschaltzeitpunkt;
- mindestens eine Funktionseinheit (20) der Flächenbearbeitungsvorrichtung (12) ist in Betrieb;
- die Flächenbearbeitungsvorrichtung (12) wird bewegt.

15. Informationssystem nach einem der Ansprüche 11 bis 14, **dadurch gekennzeichnet, dass** an der Empfangseinheit (32) festgestellt wird, ob der Betriebszeitpunkt (48) innerhalb eines dem Betriebsaufnahmezeitpunkt (54) vorgelagerten, hinsichtlich seiner Dauer vorgegebenen oder vorgebbaren Vorlaufzeitraumes (62) liegt, wobei die Mitteilung betreffend den Betrieb der Flächenbearbeitungsvorrichtung (12) insbesondere nur dann als solche angesehen wird, wenn der Betriebszeitpunkt (48) innerhalb des Vorlaufzeitraumes (62) liegt.

16. Informationssystem nach einem der Ansprüche 11 bis 15, **dadurch gekennzeichnet, dass** in dem Fall, dass eine Mitteilung der Flächenbearbeitungsvorrichtung (12) betreffend deren Betrieb an die Empfangseinheit (32) bis zum Betriebsaufnahmezeitpunkt (54) unterbleibt, von der Empfangseinheit (32) mindestens eines der Folgenden vorgenommen wird:
- Übermitteln einer Meldung an eine Aufsichtsperson der Flächenbearbeitungsvorrichtung (12);
- Erstellen eines Berichtes, der die fehlende oder verspätete Abarbeitung des Bearbeitungsauftrages durch die Flächenbearbeitungsvorrichtung (12) umfasst;
- Übermitteln einer Mitteilung und Zuweisen des der Flächenbearbeitungsvorrichtung (12) zugewiesenen Bearbeitungsauftrages an eine weitere Flächenbearbeitungsvorrichtung (12) bzw. eine Bedienperson (16) der weiteren Flächenbearbeitungsvorrichtung (12).

17. Informationssystem nach einem der Ansprüche 11 bis 16, **dadurch gekennzeichnet, dass** von der Flächenbearbeitungsvorrichtung (12) an die Empfangseinheit (32) eine weitere Mitteilung betreffend die Abarbeitung des Bearbeitungsauftrages übermittelt wird, vorzugsweise dass an der Empfangseinheit (32) festgestellt wird, ob der Zeitpunkt der Abarbeitung (60) des Bearbeitungsauftrages nach dem Auftragserledigungszeitpunkt (58) liegt, und dass eine diesbezügliche Meldung an eine Aufsichtsperson der Flächenbearbeitungsvorrichtung (12) ergeht und/oder dass ein Bericht erstellt wird, der einen Eintrag über die verzögerte Abarbeitung des Bearbeitungsauftrages durch die Flächenbearbeitungsvorrichtung (12) umfasst.

18. Informationssystem nach einem der Ansprüche 11 bis 17, **dadurch gekennzeichnet, dass** von einer Aufsichtsperson Vorgaben des spätestmöglichen Betriebsaufnahmezeitpunktes (52), des spätestmöglichen Auftragserledigungszeitpunktes (58) und/oder eines dem Betriebsaufnahmezeitpunkt (54) vorgelagerten Vorlaufzeitraumes (62) über eine Eingabeschnittstelle (40) bereitgestellt werden.

19. Informationssystem nach einem der Ansprüche 11 bis 18, **dadurch gekennzeichnet, dass** ein Bericht erstellt wird über mindestens eine Flächenbearbeitungsvorrichtung (12), der mindestens eines der Folgenden umfasst:
- eine Feststellung, dass ein der mindestens einen Flächenbearbeitungsvorrichtung (12) zugewiesener Bearbeitungsauftrag nicht oder nicht vor dem Auftragserledigungszeitpunkt (54) abgearbeitet wurde;
- den Grund hierfür, sofern dies auf eine technische Ursache zurückzuführen ist, insbesondere einen Defekt der Flächenbearbeitungsvorrichtung (12);
- vorgesehene Arbeitszeiten der mindestens einen Flächenbearbeitungsvorrichtung (12), insbesondere den Betriebsaufnahmezeitpunkt (54), den Auftragserledigungszeitpunkt (58) und/oder einen dem Betriebsaufnahmezeitpunkt (54) vorgelagerten Vorlaufzeitraum (62), sowie der Flächenbearbeitungsvorrichtung (12) zugewiesene Bearbeitungsaufträge;
- tatsächliche Arbeitszeiten der mindestens einen Flächenbearbeitungsvorrichtung (12), insbesondere eine tagesabhängige Betriebszeit oder ein tagesabhängiges Betriebsintervall.

20. Informationssystem nach einem der Ansprüche 11 bis 19, **dadurch gekennzeichnet, dass** die Flächenbearbeitungsvorrichtung (12) eine selbstfahrende und selbstlenkende Flächenbearbeitungsvorrichtung (12) ist und/oder dass die Flächenbearbeitungsvorrichtung (12) eine Flächenreinigungsvorrichtung ist, insbesondere eine Bodenreinigungsvorrichtung (10).

## Claims

1. A method for monitoring a use of a surface processing apparatus to which a processing task is allocated, wherein the surface processing apparatus (12) transmits a notification concerning the operation of the surface processing apparatus (12) at an operating time (48) and thereby the execution of the processing task to an external receiving unit (32), **characterized in that**, at the receiving unit (32), it is determined whether the operating time (48) lies before or, at the latest, at a specified or specifiable latest possible operation initiation time (54), wherein the duration from the operation initiation time (54) to a specifiable or specified latest possible task completion time (58) is at least as long as the expected time for execution of the processing task.

2. The method in accordance with claim 1, **characterized in that**, at the receiving unit, it is determined that the execution of the processing task will be completed before the task completion time (58), under the assumption that the operation of the surface processing apparatus (12) is continued.

3. The method in accordance with claim 1 or 2, **characterized in that** at least one of the following applies to the notification:
- the notification is transmitted from the surface processing apparatus (12) to the receiving unit (32) without any prior request by said receiving unit for notification;
- the notification is transmitted from the surface processing apparatus (12) at the operating time (48);
- the notification is transmitted to the receiving unit (32) when the surface processing apparatus (12) is started up or put into service.

4. The method in accordance with any one of the preceding claims, **characterized in that** the notification comprises and/or requires at least one of the following pieces of information:
- the surface processing apparatus (12) is switched on;
- a piece of time information concerning the switch-on time;
- at least one functional unit (20) of the surface processing apparatus (12) is in operation;
- the surface processing apparatus (12) is moving.

5. The method in accordance with any one of the preceding claims, **characterized in that**, at the receiving unit (32), it is determined whether the operating time (48) lies within a lead time period (62) which is prior to the operation initiation time (54) and of which the duration is specified or specifiable, wherein the notification concerning the operation of the surface processing apparatus (12) is, in particular, considered as such only then when the operating time (48) lies within the lead time period (62).

6. The method in accordance with any one of the preceding claims, **characterized in that**, if no notification concerning the operation of the surface processing apparatus (12) has been transmitted from said surface processing apparatus (12) to the receiving unit (32) by the operation initiation time (54), at least one of the following is carried out by the receiving unit (32):
- a message is transmitted to a supervisor of the surface processing apparatus (12);
- a report is established, which comprises the lack of, or tardy execution of the processing task by the surface processing apparatus (12);
- a notification and allocation of the processing task allocated to the surface processing apparatus (12) are transmitted to a further surface processing apparatus (12) or an operator (16) of the further surface processing apparatus (12).

7. The method in accordance with any one of the preceding claims, **characterized in that** the surface processing apparatus (12) transmits, to the receiving unit (32), a further notification concerning the execution of the processing task, preferably **in that** at the receiving unit (32), it is determined whether the time of the execution (60) of the processing task lies after the task completion time (58), and **in that** a message in this regard is issued to a supervisor of the surface processing apparatus (12), and/or **in that** a report is established, which comprises an entry concerning the delayed execution of the processing task by the surface processing apparatus (12).

8. The method in accordance with any one of the preceding claims, **characterized in that** specifications of the latest possible operation initiation time (52), of the latest possible task completion time (58), and/or of a lead time period (62) prior to the operation initiation time (54) are provided by a supervisor via an input interface (40).

9. The method in accordance with any one of the preceding claims, **characterized in that** a report is established concerning at least one surface processing apparatus (12), said report comprising at least one of the following:
- a determination that a processing task allocated to the at least one surface processing apparatus (12) has not been executed or has not been executed before the task completion time (54);
- the reason for this, if this is to be attributed to a technical cause, in particular a defect at the surface processing apparatus (12);
- intended working times of the at least one surface processing apparatus (12), in particular the operation initiation time (54), the task completion time (58), and/or a lead time period (62) prior to the operation initiation time (54), and also processing tasks allocated to the surface processing apparatus (12);
- actual working times of the at least one surface processing apparatus (12), in particular a day-dependent operating time or a day-dependent operating interval.

10. The method in accordance with any one of the preceding claims, **characterized in that** a self-propelling and self-steering surface processing apparatus (12) is used as surface processing apparatus (12) and/or **in that** the method is applied with a surface-cleaning apparatus, in particular a floor-cleaning apparatus (10).

11. An information system for carrying out the method in accordance with any one of the preceding claims, comprising a surface processing apparatus (12) to which a processing task is allocated, and an external receiving unit (32), wherein a notification concerning the operation of the surface processing apparatus (12) at an operating time (48) and thereby the execution of the processing task is transmitted from the surface processing apparatus (12) to the receiving unit (32) via a communications interface (28), **characterized in that**, at the receiving unit, it is determined whether the operating time (48) lies before or, at the latest, at a specified or specifiable latest possible operation initiation time (54), wherein the duration from the operation initiation time (54) to a specifiable or specified latest possible task completion time (58) is at least as long as the expected time for execution of the processing task.

12. The information system in accordance with claim 11, **characterized in that**, at the receiving unit (32), it is determined that the execution of the processing task will be completed before the task completion time (58), under the assumption that the operation of the surface processing apparatus (12) is continued.

13. The information system in accordance with claim 11 or 12, **characterized in that** at least one of the following applies to the notification:
- the notification is transmitted from the surface processing apparatus (12) to the receiving unit without any prior request by said receiving unit for notification;
- the notification is transmitted from the surface processing apparatus (12) at the operating time (48);
- the notification is transmitted to the receiving unit (32) when the surface processing apparatus (12) is started up or put into service.

14. The information system in accordance with any one of claims 11 to 13, **characterized in that** the notification comprises and/or requires at least one of the following pieces of information:
- the surface processing apparatus (12) is switched on;
- a piece of time information concerning the switch-on time;
- at least one functional unit (20) of the surface processing apparatus (12) is in operation;
- the surface processing apparatus (12) is moving.

15. The information system in accordance with any one of claims 11 to 14, **characterized in that**, at the receiving unit (32), it is determined whether the operating time (48) lies within a lead time period (62) which is prior to the operation initiation time (54) and of which the duration is specified or specifiable, wherein the notification concerning the operation of the surface processing apparatus (12) is, in particular, considered as such only then when the operating time (48) lies within the lead time period (62).

16. The information system in accordance with any one of claims 11 to 15, **characterized in that**, if no notification concerning the operation of the surface processing apparatus (12) has been transmitted from said surface processing apparatus to the receiving unit (32) by the operation initiation time (54), at least one of the following is carried out by the receiving unit (32):
- a message is transmitted to a supervisor of the surface processing apparatus (12);
- a report is established, which comprises the lack of, or tardy execution of the processing task by the surface processing apparatus (12);
- a notification and allocation of the processing task allocated to the surface processing apparatus (12) are transmitted to a further surface processing apparatus (12) or an operator (16) of the further surface processing apparatus (12).

17. The information system in accordance with any one of claims 11 to 16, **characterized in that** a further notification concerning the execution of the processing task is transmitted from the surface processing apparatus (12) to the receiving unit (32), preferably in that at the receiving unit (32), it is determined whether the time of the execution (60) of the processing task lies after the task completion time (58), and **in that** a message in this regard is issued to a supervisor of the surface processing apparatus (12), and/or **in that** a report is established, which comprises an entry concerning the delayed execution of the processing task by the surface processing apparatus (12).

18. The information system in accordance with any one of claims 11 to 17, **characterized in that** specifications of the latest possible operation initiation time (52), of the latest possible task completion time (58), and/or of a lead time period (62) prior to the operation initiation time (54) are provided by a supervisor via an input interface (40).

19. The information system in accordance with any one of claims 11 to 18, **characterized in that** a report is established regarding at least one surface processing apparatus (12), said report comprising at least one of the following:
- a determination that a processing task allocated to the at least one surface processing apparatus (12) has not been executed or has not been executed before the task completion time (54);
- the reason for this, if this is to be attributed to a technical cause, in particular a defect of the surface processing apparatus (12);
- intended working times of the at least one surface processing apparatus (12), in particular the operation initiation time (54), the task completion time (58), and/or a lead time period (62) prior to the operation initiation time (54), and also processing tasks allocated to the surface processing apparatus (12);
- actual working times of the at least one surface processing apparatus (12), in particular a day-dependent operating time or a day-dependent operating interval.

20. The information system in accordance with any one of claims 11 to 19, **characterized in that** a self-propelling and self-steering surface processing apparatus (12) is used as surface processing apparatus (12) and/or **in that** the surface processing apparatus (12) is a surface-cleaning apparatus, in particular a floor-cleaning apparatus (10).

## Revendications

1. Procédé pour surveiller une intervention d'un dispositif de traitement de surface auquel est attribuée une mission de traitement, où le dispositif de traitement de surface (12) transmet à une unité de réception externe (32) une communication qui concerne le fonctionnement du dispositif de traitement de surface (12) à un instant de fonctionnement (48) et concerne ainsi l'exécution de la mission de traitement, **caractérisé en ce qu'**il est établi au niveau de l'unité de réception (32) si l'instant de fonctionnement (48) est situé avant ou au plus tard à un instant de commencement de fonctionnement le plus tardif possible (54) attribué ou pouvant être attribué, où la durée depuis l'instant de commencement de fonctionnement (54) jusqu'à un instant d'accomplissement de mission le plus tardif possible (58) pouvant être attribué ou attribué est au moins aussi grande que la durée attendue pour l'exécution de la mission de traitement.

2. Procédé selon la revendication 1, **caractérisé en ce qu'**il est établi au niveau de l'unité de réception que l'exécution de la mission de traitement sera terminée avant l'instant d'accomplissement de la mission (58) en supposant que le fonctionnement du dispositif de traitement de surface (12) est prolongé.

3. Procédé selon la revendication 1 ou 2, **caractérisé en ce que** pour la communication au moins l'un de ce qui suit est valable :
- la communication est transmise par le dispositif de traitement de surface (12) sans invitation préalable de l'unité de réception (32) pour la communication à celle-ci ;
- la communication est transmise par le dispositif de traitement de surface (12) à l'instant de fonctionnement (48) ;
- la communication est transmise lors de la mise en service ou de la mise en marche du dispositif de traitement de surface (12) à l'unité de réception (32).

4. Procédé selon l'une des revendications précédentes, **caractérisé en ce que** la communication comprend et/ou exige au moins l'une des informations suivantes :
- le dispositif de traitement de surface (12) est mis en marche ;
- une information de temps concernant l'instant de mise en marche ;
- au moins une unité de fonction (20) du dispositif de traitement de surface (12) est en fonctionnement ;
- le dispositif de traitement de surface (12) est mis en mouvement.

5. Procédé selon l'une des revendications précédentes, **caractérisé en ce qu'**il est établi au niveau de l'unité de réception (32) si l'instant de fonctionnement (48) est situé à l'intérieur d'une période préalable (62) attribuée ou pouvant être attribuée concernant sa durée, précédant l'instant de commencement de fonctionnement (54), où la communication concernant le fonctionnement du dispositif de traitement de surface (12) ne doit être considérée en particulier comme telle que quand l'instant de fonctionnement (48) est situé à l'intérieur de la période préalable (62).

6. Procédé selon l'une des revendications précédentes, **caractérisé en ce que**, dans le cas où une communication du dispositif de traitement de surface (12) concernant son fonctionnement n'a pas lieu au niveau de l'unité de réception (32) jusqu'à l'instant de commencement de fonctionnement (54), au moins l'un des suivants est entrepris par l'unité de réception (32) :
- transmission d'une annonce à une personne qui surveille le dispositif de traitement de surface (12) ;
- établissement d'un rapport qui comprend l'exécution manquante ou retardée de la mission de traitement par le dispositif de traitement de surface (12) ;
- transmission d'une communication et attribution de la mission de traitement attribuée au dispositif de traitement de surface (12) à un autre dispositif de traitement de surface (12) ou une personne (16) qui manoeuvre l'autre dispositif de traitement de surface (12).

7. Procédé selon l'une des revendications précédentes, **caractérisé en ce que** le dispositif de traitement de surface (12) transmet à l'unité de réception (32) une autre communication concernant l'exécution de la mission de traitement, de préférence **en ce qu'**il est établi au niveau de l'unité de réception (32) si l'instant de l'exécution (60) de la mission de traitement est situé après l'instant d'accomplissement de la mission (58), et **en ce qu'**une annonce concernant ceci à une personne qui surveille le dispositif de traitement de surface (12) a lieu et/ou **en ce qu'**un rapport est établi qui comprend une publication concernant l'exécution retardée de la mission de traitement par le dispositif de traitement de surface (12).

8. Procédé selon l'une des revendications précédentes, **caractérisé en ce que** des attributions de l'instant de commencement de fonctionnement le plus tardif possible (52), de l'instant d'accomplissement de mission le plus tardif possible (58) et/ou d'une période préalable (62) précédant l'instant de commencement de fonctionnement (54) sont préparées par une personne qui surveille par le biais d'une interface d'introduction (40).

9. Procédé selon l'une des revendications précédentes, **caractérisé en ce qu'**un rapport est établi concernant au moins un dispositif de traitement de surface (12), qui comprend au moins l'un de ce qui suit :
- une constatation qu'une mission de traitement attribuée au au moins un dispositif de traitement de surface (12) n'a pas été exécutée ou pas exécutée avant l'instant d'accomplissement de mission (54);
- la raison pour ceci, dans la mesure où ceci doit être attribué à une cause technique, en particulier un défaut sur le dispositif de traitement de surface (12) ;
- des durées de travail prévues du au moins un dispositif de traitement de surface (12), en particulier l'instant de commencement de fonctionnement (54), l'instant d'accomplissement de la mission (58) et/ou une période préalable (62) précédant l'instant de commencement de fonctionnement (54), ainsi que des missions de traitement attribuées au dispositif de traitement de surface (12) ;
- des durées de travail réelles du au moins un dispositif de traitement de surface (12), en particulier une durée de fonctionnement dépendant du jour ou un intervalle de fonctionnement dépendant du jour.

10. Procédé selon l'une des revendications précédentes, **caractérisé en ce qu'**un dispositif de traitement de surface (12) automoteur et autoguidé est utilisé comme dispositif de traitement de surface (12) et/ou **en ce que** le procédé est appliqué pour un dispositif de nettoyage de surface, en particulier un dispositif de nettoyage du sol (10).

11. Système d'information pour la mise en oeuvre du procédé selon l'une des revendications précédentes, comprenant un dispositif de traitement de surface (12), auquel est attribuée une mission de traitement, et une unité de réception externe (32), où une communication qui concerne le fonctionnement du dispositif de traitement de surface (12) à un instant de fonctionnement (48) et donc l'exécution de la mission de traitement est transmise par le dispositif de traitement de surface (12) à l'unité de réception (32) par le biais d'une interface de communication (28), **caractérisé en ce qu'**il est établi au niveau de l'unité de réception si l'instant de fonctionnement (48) est situé avant ou au plus tard à un instant de commencement de fonctionnement le plus tardif possible (54) attribué ou pouvant être attribué, où la durée depuis l'instant de commencement de fonctionnement (54) jusqu'à un instant d'accomplissement de mission le plus tardif possible (58) pouvant être attribué ou attribué est au moins aussi grande que la durée attendue pour l'exécution de la mission de traitement.

12. Système d'information selon la revendication 11, **caractérisé en ce qu'**il est établi au niveau de l'unité de réception (32) que l'exécution de la mission de traitement sera terminée avant l'instant d'accomplissement de la mission (58) en supposant que le fonctionnement du dispositif de traitement de surface (12) est prolongé.

13. Système d'information selon la revendication 11 ou 12, **caractérisé en ce que** pour la communication au moins l'un de ce qui suit est valable :
- la communication est transmise par le dispositif de traitement de surface (12) sans invitation préalable pour la communication à celui-ci ;
- la communication est transmise par le dispositif de traitement de surface (12) à l'instant de fonctionnement (48) ;
- la communication est transmise lors de la mise en service ou de la mise en marche du dispositif de traitement de surface (12) à l'unité de réception (32).

14. Système d'information selon l'une des revendications 11 à 13, **caractérisé en ce que** la communication comprend et/ou exige au moins l'une des informations suivantes :
- le dispositif de traitement de surface (12) est mis en marche ;
- une information de temps concernant l'instant de mise en marche ;
- au moins une unité de fonction (20) du dispositif de traitement de surface (12) est en fonctionnement ;
- le dispositif de traitement de surface (12) est mis en mouvement.

15. Système d'information selon l'une des revendications 11 à 14, **caractérisé en ce qu'**il est établi au niveau de l'unité de réception (32) si l'instant de fonctionnement (48) est situé à l'intérieur d'une période préalable (62) attribuée ou pouvant être attribuée concernant sa durée, précédant l'instant de commencement de fonctionnement (54), où la communication concernant le fonctionnement du dispositif de traitement de surface (12) ne doit être considérée en particulier comme telle que quand l'instant de fonctionnement (48) est situé à l'intérieur de la période préalable (62).

16. Système d'information selon l'une des revendications 11 à 15, **caractérisé en ce que**, dans le cas où une communication du dispositif de traitement de surface (12) concernant son fonctionnement n'a pas lieu au niveau de l'unité de réception (32) jusqu'à l'instant de commencement de fonctionnement (54), au moins l'un des suivants est entrepris par l'unité de réception (32) :
- transmission d'une annonce à une personne qui surveille le dispositif de traitement de surface (12) ;
- établissement d'un rapport qui comprend l'exécution manquante ou retardée de la mission de traitement par le dispositif de traitement de surface (12) ;
- transmission d'une communication et attribution de la mission de traitement attribuée au dispositif de traitement de surface (12) à un autre dispositif de traitement de surface (12) ou une personne (16) qui manoeuvre l'autre dispositif de traitement de surface (12).

17. Système d'information selon l'une des revendications 11 à 16, **caractérisé en ce que** le dispositif de traitement de surface (12) transmet à l'unité de réception (32) une autre communication concernant l'exécution de la mission de traitement, de préférence **en ce qu'**il est établi au niveau de l'unité de réception (32) si l'instant de l'exécution (60) de la mission de traitement est situé après l'instant d'accomplissement de la mission (58), et **en ce qu'**une annonce concernant ceci à une personne qui surveille le dispositif de traitement de surface (12) a lieu et/ou **en ce qu'**un rapport est établi qui comprend une publication concernant l'exécution retardée de la mission de traitement par le dispositif de traitement de surface (12).

18. Système d'information selon l'une des revendications 11 à 17, **caractérisé en ce que** des attributions de l'instant de commencement de fonctionnement le plus tardif possible (52), de l'instant d'accomplissement de mission le plus tardif possible (58) et/ou d'une période préalable (62) précédant l'instant de commencement de fonctionnement (54) sont préparées par une personne qui surveille par le biais d'une interface d'introduction (40).

19. Système d'information selon l'une des revendications 11 à 18, **caractérisé en ce qu'**un rapport est établi concernant au moins un dispositif de traitement de surface (12), qui comprend au moins l'un de ce qui suit :
- une constatation qu'une mission de traitement attribuée au au moins un dispositif de traitement de surface (12) n'a pas été exécutée ou pas exécutée avant l'instant d'accomplissement de mission (54);
- la raison pour ceci, dans la mesure où ceci doit être attribué à une cause technique, en particulier un défaut du dispositif de traitement de surface (12) ;
- des durées de travail prévues du au moins un dispositif de traitement de surface (12), en particulier l'instant de commencement de fonctionnement (54), l'instant d'accomplissement de la mission (58) et/ou une période préalable (62) précédant l'instant de commencement de fonctionnement (54), ainsi que des missions de traitement attribuées au dispositif de traitement de surface (12) ;
- des durées de travail réelles du au moins un dispositif de traitement de surface (12), en particulier une durée de fonctionnement dépendant du jour ou un intervalle de fonctionnement dépendant du jour.

20. Système d'information selon l'une des revendications 11 à 19, **caractérisé en ce que** le dispositif de traitement de surface (12) est un dispositif de traitement de surface (12) automoteur et autoguidé et/ou **en ce que** le dispositif de traitement de surface (12) est un dispositif de nettoyage de surface, en particulier un dispositif de nettoyage du sol (10).
